# EUROPÄISCHE PATENTANMELDUNG

(11) **EP 0 537 380 A1**
(43) Veröffentlichungstag der Anmeldung: **21.04.1993**
(21) Anmeldenummer: 91122347.7
(22) Anmeldetag: 28.12.1991
(51) Int. Cl.: B24B 41/00

(54) **Profilschleifmaschine**

(30) Priorität: 16.09.1991 DE 4130736
(71) Anmelder: Werkzeugmaschinenbau Präzisions-Technik GmbH, D-97877 Wertheim (DE)
(72) Erfinder: Ort, Ferdinand, Dipl.-Ing. (FH), W-8706 Höchberg (DE)
(74) Vertreter: Katscher, Helmut, Dipl.-Ing.

(57) **Zusammenfassung**

Eine Profilschleifmaschine weist einen Spindelkopf (1) auf, der auf einem Drehtisch (2) aufgenommen ist. Ein Spindelträger (9), an dem eine Schleifspindel (10) gelagert ist, ist über eine Kreuzschlittenführung (5, 8) an einem mit dem Drehtisch (2) verbundenen Ständer (4) geführt. Der Spindelträger (9) stützt sich über einen Führungskörper (16) an einem Führungslineal (15) ab, das schwenkverstellbar gelagert ist. Die Schleifscheibe (11) führt oszillierende Hubbewegungen aus, deren Hubrichtung durch das Führungslineal (15) bestimmt wird.

## Beschreibung

Die Erfindung betrifft eine Profilschleifmaschine mit einem auf einem Drehtisch aufgenommenen Spindelkopf, an dem ein Spindelträger für eine eine Schleifscheibe tragende Schleifspindel oszillierend in einer gegenüber der Senkrechten geneigten, verstellbaren Hubrichtung geführt ist.

Derartige Profilschleifmaschinen, die üblicherweise als optische Profilschleifmaschinen ausgeführt sind, dienen dazu, an Werkstücken eine vorgegebene Profilform zu schleifen. Hierzu führt der Spindelkopf in einer horizontalen Ebene eine in zwei Achsen gesteuerte Bewegung aus. Die Sollformlinie, der der Spindelkopf dabei folgt, kann auf optischem Wege in einer Sollformzeichnung vorgegeben sein oder kann in einer Steuerung programmiert sein.

In vielen Anwendungsbereichen ist es erforderlich, am Werkstück einen Hinterschliff zu erzeugen. Zu diesem Zweck muß die Hubrichtung, in der die angetriebene Schleifscheibe oszilliert, gegenüber der Senkrechten geneigt werden (DE-PS 457 088). Die Drehbarkeit des auf dem Drehtisch aufgenommenen Spindelkopfes ermöglicht es, den Hinterschliff nicht nur stirnseitig am Werkstück, sondern auch an Seitenflächen des Werkstücks auszuführen.

Bei einer bekannten Profilschleifmaschine der eingangs genannten Gattung (DE-PS 32 20 663) wird die Verstellbarkeit der Hubrichtung des Spindelträgers dadurch erreicht, daß der Spindelträger an einem Schlitten aufgenommen ist, der in einer vertikalen Ebene entlang einer Kreisbogenführung geführt wird, die mit einem Schwenksegment verbunden ist. Der Mittelpunkt dieser Kreisbogenführung liegt auf der vertikalen Drehachse dieses Schwenksegments. Da die Genauigkeitsanforderungen bei derartigen Profilschleifmaschinen üblicherweise sehr hoch sind, muß die Kreisbogenführung bei der bekannten Maschine mit hoher Genauigkeit ausgeführt werden. Die Führung, längs deren der Spindelträger seine Hubbewegung ausführt, muß zugleich das Gewicht des Spindelträgers aufnehmen, wodurch die Führungsgenauigkeit beeinträchtigt werden kann. Da die Führung der Spindelträgers längs einer geraden Hubführung erfolgt, kann nur ein gerader Hinterschliff erzeugt werden.

Aufgabe der Erfindung ist es, eine Profilschleifmaschine der eingangs genannten Gattung so auszubilden, daß bei konstruktiv verhältnismäßig einfachem Aufbau eine hohe Führungsgenauigkeit erreicht und die Möglichkeit zur Erzeugung eines auch nicht-geradlinigen Hinterschliffs zu eröffnen.

Diese Aufgabe wird erfindungsgemäß dadurch gelöst, daß der Spindelträger an einem am Drehtisch angebrachten Ständer über eine Kreuzschlittenführung horizontal und vertikal beweglich geführt ist, und daß sich der Spindelträger mit einem Führungskörper an einem Führungslineal abstützt, das an einer mit dem Drehtisch verbundenen Lagerung mit horizontaler Lagerachse schwenkverstellbar gelagert ist.

Die die Kreuzschlittenführung bildenden beiden Führungen sind als geradlinige Schlittenführungen ausgebildet und können deshalb mit sehr hoher Genauigkeit ausgeführt werden und eine hohe Führungssteifigkeit aufweisen, da diese Führungen nicht schwenkbar oder verstellbar angeordnet sind. Die Festlegung der Hubrichtung geschieht nur dadurch, daß der Führungskörper sich entlang dem Führungslineal bewegt. Nur dieses Führungslineal ist schwenkbar und einstellbar ausgeführt, um eine Änderung der Hubrichtung zu erreichen. Damit wird eine hohe Führungsgenauigkeit erreicht.

Gemäß einer Weiterbildung des Erfindungsgedankens ist vorgesehen, daß die Kreuzschlittenführung eine vertikale Führung am Ständer aufweist, längs deren ein Vertikalschlitten verfahrbar ist, und daß der Spindelträger am Vertikalschlitten in einer horizontalen Führung verfahrbar ist. Diese beiden Führungen können verhältnismäßig lang ausgeführt werden, so daß eine sichere Abstützung der geführten Teile erreicht wird. Trotzdem stören die Führungen die Hubbewegung des Spindelträgers nicht.

Wenn ein gerader Hinterschliff erzeugt werden soll, wird das Führungslineal mit einer geraden Führungskante für den Führungskörper ausgeführt.

Wenn aber ein nicht-geradliniger, in vorgegebener Weise profilierter Hinterschliff erzeugt werden soll, wird das Führungslineal mit einer entsprechend profilierten Führungskante ausgeführt. Das Führungslineal kann in einfacher Weise ausgewechselt werden, um unterschiedliche Formen des Hinterschliffs zu erzeugen.

Vorzugsweise ist der Führungskörper in Höhe der Schleifspindel angeordnet. Durch einfache Änderung des Abstands zwischen diesem Führungskörper und der Schleifspindelachse kann erreicht werden, daß der Durchstoßpunkt der Bearbeitungslinie der Schleifscheibe durch die vertikale Drehachse des Drehtischs verlagert wird. Damit sind Profilkorrekturen ohne Änderung des Steuerprogramms einer numerisch gesteuerten Profilschleifmaschine möglich.

Die beispielsweise Ausführung der Erfindung wird nachfolgend an Beispielen näher erläutert, die in den Zeichnungen dargestellt sind. Es zeigt:

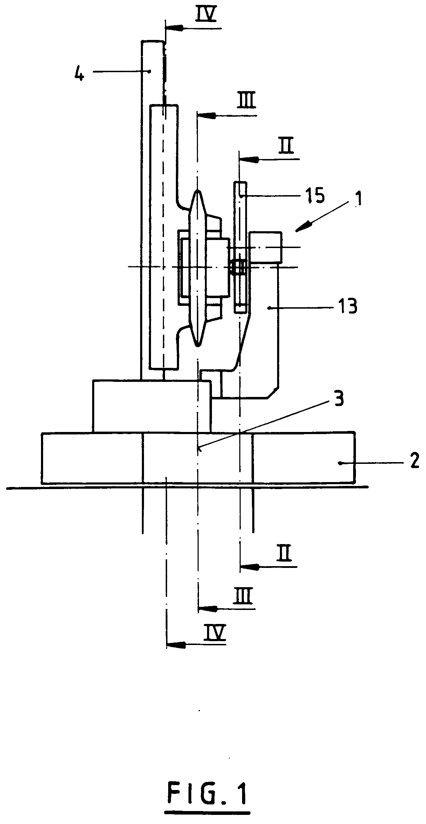

Fig. 1 in einer vereinfachten Vorderansicht einen Schleifkopf einer Profilschleifmaschine,
Fig. 2 einen Schnitt längs der Linie II-II in Fig. 1,

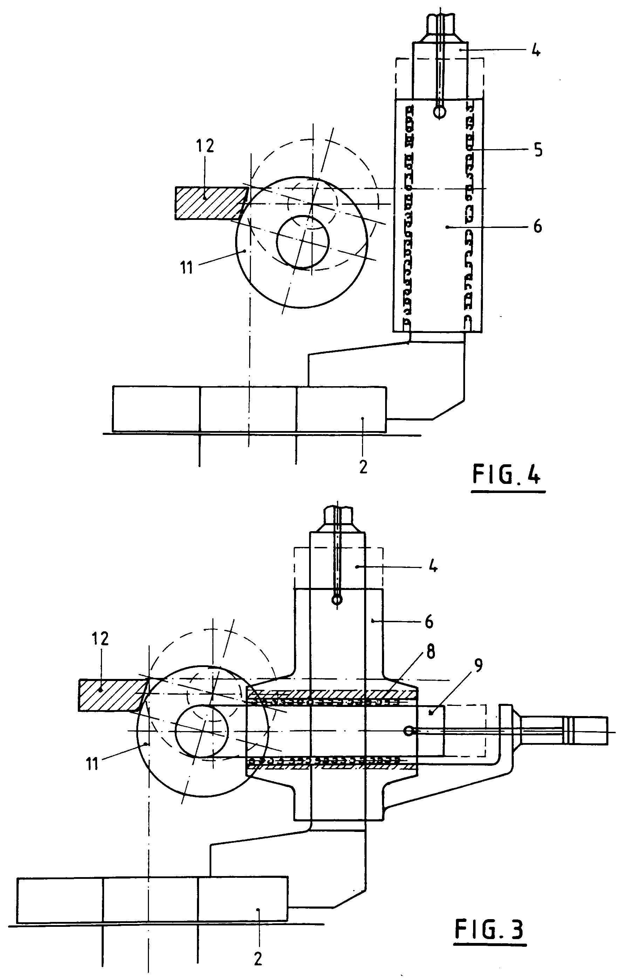

Fig. 3 einen Schnitt längs der Linie III-III in Fig. 1,
Fig. 4 einen Schnitt längs der Linie IV-IV in Fig. 1 und
Fig. 5 in einer Teildarstellung ähnlich der Fig. 2 eine abgewandelte Ausführungsform mit einem nicht-geradlinien Führungslineal.

Der in der Zeichnung dargestellte Spindelkopf 1 einer Profilschleifmaschine, beispielsweise einer optischen Profilschleifmaschine, ist auf einem Drehtisch 2 mit senkrechter Drehachse 3 aufgenommen. An einem mit dem Drehtisch 2 verbundenen Ständer 4 ist eine vertikale Führung 5 angeordnet, längs deren ein Vertikalschlitten 6 in vertikaler Richtung verfahrbar ist. Der Antrieb des Vertikalschlittens 6 erfolgt durch einen Schlittenantrieb 7, der in der Zeichnung schematisch als ein Druckmittelzylinder angedeutet ist.

Am Vertikalschlitten 6 ist eine Horizontalführung 8 vorgesehen, die ebenso wie die vertikale Führung 5 eine Gleitführung oder eine Kugelumlaufführung sein kann.

In der Horizontalführung 8 ist ein als länglicher Schlitten ausgeführter Spindelträger 9 horizontal verfahrbar. Die Führungen 5 und 8 bilden gemeinsam eine Kreuzschlittenführung für den Spindelträger 9.

Am vorderen Ende des Spindelträgers 9 ist eine Schleifspindel 10 antreibbar gelagert, deren Spindelachse bei dem hier dargestellten Ausführungsbeispiel horizontal verläuft und die eine Schleifscheibe 11 trägt. Die Schleifscheibe 11 dient zur Bearbeitung eines in der Zeichnung vereinfacht dargestellten Werkstücks 12. Stattdessen kann die Schleifspindel 10 auch neigbar und/oder senkrecht angeordnet sein.

An einem mit dem Fuß des Ständers 4 bzw. dem Drehtisch 2 verbundenen Arm 13 ist eine Lagerung 14 mit horizontaler Lagerachse angebracht, in der ein Führungslineal 15 schwenkverstellbar gelagert ist.

Ein am Spindelträger 9 angebrachter Führungskörper 16, beispielsweise ein Gleitstein, stützt sich an einer Führungskante 17 des Führungslineals 16 ab. Ein Schlittenantrieb 18, der beispielsweise wieder vereinfacht als Druckmittelzylinder angedeutet ist, ist am Vertikalschlitten 6 gelagert und greift am Spindelträger 9 an, um den Führungskörper 16 gegen die Führungskante 17 zu drücken.

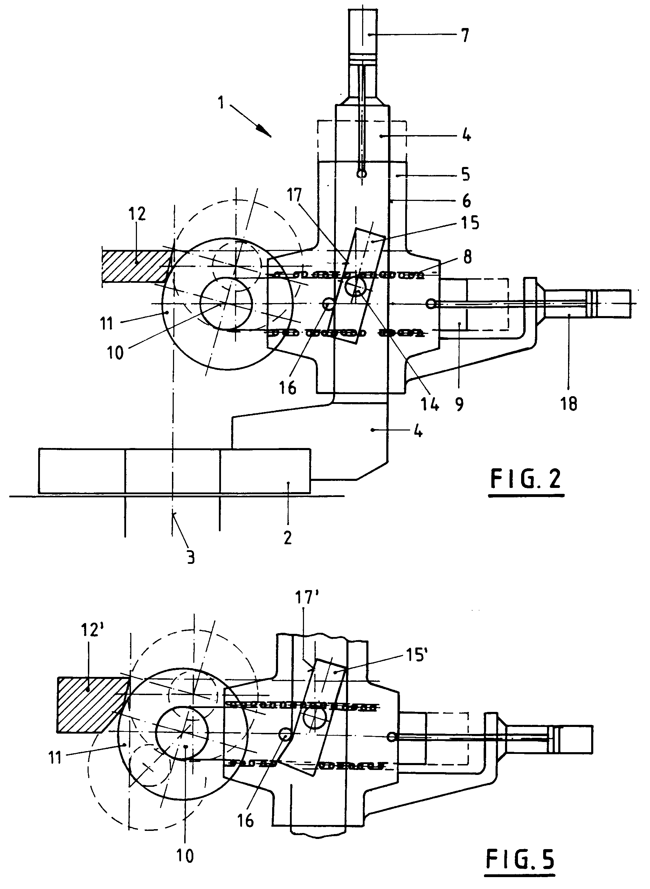

Bei dem in Fig. 2 dargestellten Ausführungsbeispiel ist die Führungskante 17 geradlinig ausgeführt. Diese Führungskante ist gegenüber der Senkrechten geneigt. Wenn der Antrieb 7 den Vertikalschlitten 6 zu einer oszillierenden Hubbewegung antreibt, gleitet der Führungskörper 16 entlang der geneigten Führungskante 17. Die Schleifscheibe 11 führt dadurch eine oszillierende Hubbewegung aus, deren Hubrichtung ebenso gegen die Senkrechte geneigt ist. Die Schleifscheibe 11 erzeugt dadurch am Werkstück 12 einen Hinterschilff im gleichen Winkel.

Das Führungslineal 15 ist in der Lagerung 14 schwenkverstellbar aufgenommen; dadurch ist eine Verstellung des Hinterschliffwinkels in einfacher Weise möglich. Bei dem dargestellten Ausführungsbeispiel liegt der Führungskörper 16 in Höhe der Achse der Schleifspindel 10.

Abweichend von dem in Fig. 2 dargestellten Ausführungsbeispiel ist das Führungslineal 15' beim Ausführungsbeispiel nach Fig. 5 mit einer abgewinkelten Führungskante 17' versehen. Die Schleifscheibe 11 führt damit keine geradlinige, sondern eine abgewinkelte Hubbewegung aus. Dadurch kann am Werkstück 12' ein abgewinkelter Hinterschliff erzeugt werden, wie in Fig. 5 angedeutet ist. Stattdessen ist es auch möglich, das auswechselbare Führungslineal 15' mit einer beliebigen anderen Profilierung auszuführen, um einen entsprechend profilierten Hinterschliff zu erzeugen. Diese Forderungen bestehen beispielsweise bei feinen Bearbeitungsstählen mit sehr hoher Genauigkeit und insbesondere auch bei Matrizen und Patrizen in der Stanztechnik sowie bei Fließpreßwerkzeugen und Ziehwerkzeugen.

## Patentansprüche

1. Profilschleifmaschine mit einem auf einem Drehtisch (2) aufgenommenen Spindelkopf, an dem ein Spindelträger (9) für eine eine Schleifscheibe (11) tragende Schleifspindel (10) oszillierend in einer gegenüber der Senkrechten geneigten, verstellbaren Hubrichtung geführt ist, dadurch gekennzeichnet, daß der Spindelträger (9) an einem am Drehtisch (2) angebrachten Ständer (4) über eine Kreuzschlittenführung (5, 8) horizontal und vertikal beweglich geführt ist, und daß sich der Spindelträger (9) mit einem Führungskörper (16) an einem Führungslineal (15, 15') abstützt, das an einer mit dem Drehtisch (2) verbundenen Lagerung (14) mit horizontaler Lagerachse schwenkverstellbar gelagert ist.

2. Profilschleifmaschine nach Anspruch 1, dadurch gekennzeichnet, daß die Kreuzschlittenführung eine vertikale Führung (5) am Ständer (4) aufweist, längs deren ein Vertikalschlitten (6) verfahrbar ist, und daß der Spindelträger (9) am Vertikalschlitten (6) in einer horizontalen Führung (8) verfahrbar ist.

3. Profilschleifmaschine nach Anspruch 1, dadurch gekennzeichnet, daß das Führungslineal (15') eine profilierte Führungskante (17') für den Führungskörper (16) aufweist.

4. Profilschleifmaschine nach Anspruch 1, dadurch gekennzeichnet, daß das Führungslineal (15, 15') auswechselbar ist.
